# EUROPÄISCHE PATENTSCHRIFT

(11) **EP 1 642 004 B1**
(45) Veröffentlichungstag und Bekanntmachung des Hinweises auf die Patenterteilung: **19.09.2007**
(21) Anmeldenummer: 04738774.1
(22) Anmeldetag: 24.06.2004
(51) Int. Cl.: F01C 21/10, F02F 7/00

(54) **IN EINEM VERBRENNUNGSMOTOR INTEGRIERTE PUMPE**
PUMP THAT IS INTEGRATED INTO AN INTERNAL COMBUSTION ENGINE
POMPE INTEGREE DANS UN MOTEUR A COMBUSTION INTERNE

(30) Priorität: 30.06.2003 DE 10329283
(43) Veröffentlichungstag der Anmeldung: 05.04.2006
(73) Patentinhaber: ixetic Hückeswagen GmbH, 42499 Hückeswagen (DE)
(72) Erfinder: SCHULZ-ANDRES, Heiko, 42499 Hückeswagen (DE)
(74) Vertreter: Duschl, Edgar Johannes
(86) Internationale Anmeldenummer: PCT/DE2004/001325
(87) Internationale Veröffentlichungsnummer: WO 2005/001246

(56) Entgegenhaltungen:
- DE-A- 2 502 034
- DE-A- 2 836 094
- DE-A- 4 137 279
- DE-A- 19 632 024

## Beschreibung

Die Erfindung betrifft eine Pumpe, insbesondere Flügelzellenpumpe, Rollenzellenpumpe oder Zahnradpumpe, mit einer Rotationsgruppe, wie beispielsweise mit Rotor, Flügeln oder Rollen, Hubkonturring und Seitenplatten bzw. Zahnrädern oder Ritzel und Außenrad, wobei die Rotationsgruppe innerhalb eines topfförmigen Aluminiumgehäuses angeordnet ist.

Derartige Pumpen sind z.B aus der DE 2 502 034 A bekannt. So können derartige Pumpen beispielsweise als Ölpumpen in Form von Kurbelwellenhalspumpen ausgeführt werden. Dabei soll die Ölpumpe den Bauraum innerhalb der Riemenscheibe nutzen. Bei dem Einsatz einer bekannten Innenzahnradpumpe (Gerotorpumpe) für diesen Anwendungsfall ergeben sich in radialer Richtung deutliche Einbauraumprobleme.

Das äußere große Zahnrad (Innenzahnrad) ist exzentrisch gegenüber dem kleinen Außenzahnrad, welches zentral auf der Kurbelwelle sitzt, angeordnet. Somit vergrößert die Exzentrizität des Innenzahnrades die Bauraumbedingungen.

Die Befestigungsschrauben für einen Pumpendeckel müssen radial außerhalb des rotierenden Innenzahnrades angebracht werden. Zuzüglich der notwendigen Restwandquerschnitte für die Schraubengewinde ergibt sich dann der benötigte radiale Bauraum für diese Pumpengeometrie, oder bei vorgegebenem radialem Bauraum kann nur die maximal mögliche Pumpengröße ermittelt werden. In gewissen Fällen ist dann der zur Verfügung stehende Bauraum nicht mehr ausreichend, um eine Pumpe der gewünschten Größe unterzubringen.

Es ist also Aufgabe der Erfindung, eine Pumpe darzustellen, die diese Probleme nicht aufweist.

Die Aufgabe wird gelöst durch eine Pumpe, insbesondere Flügelzellenpumpe, zellenpumpe oder Zahnradpumpe, mit einer Rotationsgruppe, wie beispielsweise mit Rotor, Flügeln oder Rollen, Hubkonturring und Seitenplatten bzw. Zahnrädern oder Ritzel und Außenrad, wobei die Rotationsgruppe innerhalb eines topfförmigen Aluminiumgehäuses angeordnet ist, wobei erfindungsgemäß das Aluminiumgehäuse an einem Deckel eines Kurbelwellengehäuses eines Verbrennungsmotors innerhalb eines Riemenscheibenbereichs dargestellt ist und durch einen topfförmigen Blechdeckel umgriffen wird. Das hat unter anderem den Vorteil, dass ein Blechdeckel aus entsprechendem Stahlblech oder vergleichbaren Materialien gegenüber Gussdeckeln z. B. eine bessere Öldichtheit aufweist.

Bevorzugt wird eine Pumpe, bei der der Blechdeckel und das Aluminiumgehäuse mittels eines Presssitzes miteinander verbunden sind. Dadurch wird der Einbauraum für Befestigungsschrauben eingespart, was in diesem Bereich große Vorteile bringt. Weiterhin wird eine Pumpe bevorzugt, bei welcher der Blechdeckel und das Aluminiumgehäuse zusätzlich zum Presssitz eine Klebeverbindung aufweisen. Das hat den Vorteil, dass auch bei unterschiedlicher Temperaturausdehnung der verwendeten Werkstoffe eine zusätzliche sichere Verbindung zwischen den Bauteilen erhalten bleibt. Auch wird eine Pumpe bevorzugt, bei welcher die Klebeverbindung zusätzlich als Dichtungseinrichtung wirksam ist. Das hat den Vorteil, dass keine zusätzliche O-Ring-Abdichtung zwischen den Bauteilen erforderlich ist.

Eine erfindungsgemäße Pumpe zeichnet sich dadurch aus, dass der Blechdeckel mit einer ersten Seitenplatte eine Aufnahme für einen Radial-Wellendichtring ausbildet. Auch wird eine Pumpe bevorzugt, welche von der Kurbelwelle des Verbrennungsmotors angetrieben wird und wobei der Wellendichtring die Kurbelwelle und die Pumpe nach außen abdichtet Das hat den Vorteil einer sehr kompakten Anordnung des Radialwellendichtrings und einer optimalen Ausnutzung seiner Funktion.

Bevorzugt wird auch eine Pumpe, welche eine Schmierölpumpe für den Verbrennungsmotor darstellt. Im Falle einer Flügelzellenpumpe kann die Flügelzellenpumpe eine doppelhubige (d. h. zweiflutige), temperaturabhängig und/oder druckabhängig schaltbare Flügelzellenpumpe sein. Das hat den Vorteil, dass bei hohem Schmierölbedarf, beispielsweise bei hohen Temperaturen, beide Fluten der Flügelzellenpumpe das Schmieröl unter Druck fördern, während bei niedrigem Schmierölbedarf eine Flut der Flügelzellenpumpe auf drucklosen Umlauf geschaltet werden kann.

Eine erfindungsgemäße Pumpe zeichnet sich dadurch aus, dass die Flügel oder Rollen der Flügelzellenpumpe oder Rollenzellenpumpe durch Unterflügelführungseinrichtungen, wie beispielsweise Unterflügelkonturringe, ausgefahren werden. Auch wird eine Pumpe bevorzugt, bei welcher der Hubkonturring Ausnehmungen für eine Saugölzuführung von der Rückseite zur Vorderseite aufweist, so dass Öl aus dem Ansaugbereich um den Hubring herum auf die axial gegenüberliegende Seite strömen kann. Das hat den Vorteil, dass größere Hubringbreiten kavitationssicher einsetzbar sind.

Eine weitere erfindungsgemäße Pumpe zeichnet sich dadurch aus, dass der Hubkonturring und die erste Seitenplatte zum Aluminiumgehäuse durch zwei Stifte oder einen Zentrierbund und einen Stift zentriert und fixiert sind. Weiterhin wird eine Pumpe bevorzugt, bei welcher das Aluminiumgehäuse eine zweite Seitenplatte ausbildet und Ansaug- und Ausstoßöffnungen und gegebenenfalls Unterflügelnuten aufweist und die axial gegenüberliegende erste Seitenplatte in diesen Bereichen so genannte Schattenports, welche die Umrisse der Ansaug- und Ausstoßöffnungen ohne Durchgangsöffnungen aufweisen. Das hat den Vorteil, dass trotz schmaler Bauweise die Druckwirkflächen innerhalb der Rotationsgruppe axial kompensiert sind.

Eine erfindungsgemäße Pumpe zeichnet sich dadurch aus, dass der Hubkonturring zusätzlich radiale Ansaugöffnungen aufweisen kann und zum Aluminiumgehäuse radial beabstandet sein kann. Diese Ansaugöffnungen müssen nicht genau positioniert werden, da die Steuerzeiten für das Ansaugen, Trennen und Ausstoßen über die Druck- und Saugnieren im Gehäuse bzw. in der Seitenplatte bestimmt werden.

Auch wird eine Pumpe bevorzugt, bei welcher der Ring aus Blech dargestellt ist und eine doppelhubige Kontur aufweist. Durch die Ausführung aus Blech wird bei hoher Festigkeit eine geringe Bauhöhe gegenüber herkömmlichen Sinterringen oder Gussringen realisiert, wobei bei Verwendung von radialen Öffnungen diese sogar einfach ausstanzbar sind.

Auch wird eine Pumpe bevorzugt, bei welcher der Blechdeckel einen eingepressten Hubring, beispielsweise aus Sinterstahl, aufweist. Das hat den Vorteil, dass der Hubring nur eine geringe Wandstärke aufweisen muss, da er durch den Blechdeckel nach außen abgestützt werden kann.

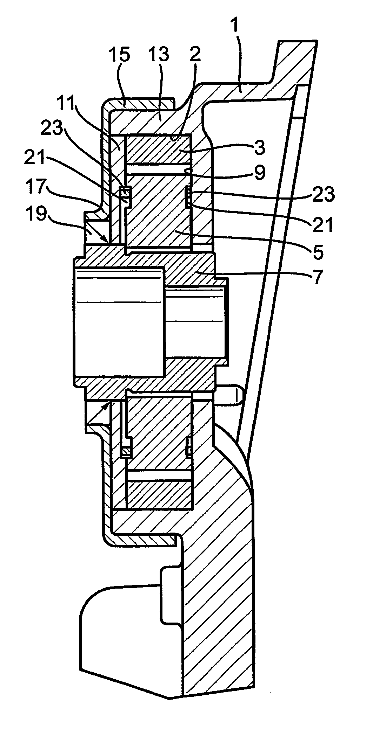

Die Erfindung wird nun anhand der Figur beschrieben.

Die Figur zeigt ein Aluminiumgehäuse 1, welches beispielsweise einen so genannten Steuerdeckel eines Verbrennungsmotors darstellt, also den Abschlussdeckel, an welchem die Kurbelwelle aus dem Kurbelgehäuse austritt und an welchem die entsprechenden Riemenscheiben für die Steuerung und Nebenaggregate des Verbrennungsmotors angeordnet sind. Innerhalb einer topfförmigen Ausnehmung 2 des Aluminiumgehäuses ist ein Konturring 3 einer Flügelzellenpumpe und ein Rotor 5 dargestellt, wobei der Rotor in radialen Schlitzen, hier nicht zu erkennen, radial verschiebliche Flügel enthält. Der Rotor 5 ist auf einer Hülse 7 gelagert und drehfest mit der Hülse 7 verbunden. Die Hülse 7 wiederum wird durch ein Befestigungsmittel, beispielsweise durch eine Schraube, auf dem Kurbelwellenende befestigt Eine Seitenwand 9 des Aluminiumgehäuses 1 stellt die hintere Abdeckung der Rotationsgruppe dar und enthält, hier nicht dargestellt, entsprechende Einlassöffnungen für das Schmieröl und Auslassöffnungen, welche auch als so genannte Drucknieren und Saugnieren bezeichnet werden. Die Rotationsgruppe ist auf der Gegenseite axial durch eine Seitenplatte 11 abgedeckt, welche entsprechend den Drucknieren und Saugnieren gegenüberliegend so genannte Schattenports enthalten kann, das bedeutet drucknieren- und saugnierenförmige Vertiefungen, welche keine Durchgangsöffnungen nach außen haben. Die topfförmige Auskragung 13 des Aluminiumgehäuses und die Seitenplatte 11 werden von einem Blechdeckel 15 umschlossen. Der Blechdeckel 15 enthält ferner an seinem radial inneren Bereich eine Umstülpung 17, die gemeinsam mit dem radial inneren Bereich der Seitenplatte 11 eine Aufnahme für einen Radialwellendichtring 19 bildet. Der Radialwellendichtring 19 dichtet die Rotationsgruppe der Pumpe und die rotierende Hülse 7 mit der Kurbelwelle gegenüber der Umgebung nach außen hin ab. Der Rotor enthält weiterhin an seinen Seitenflächen Vertiefungen 21, in welchen entsprechende Unterflügelkonturringe 23 angeordnet sind, welche mit verkleinerten radialen Abmessungen die Hubkonturwiedergeben und damit unter den Flügeln die Flügel entsprechend der Hubkontur nach außen führen und annähernd in Anlage an den Konturring 3 bringen. Das ist insbesondere für den Kaltstart von Vorteil, wenn die Flügel noch nicht durch eine ausreichende Fliehkraft oder gegebenenfalls durch eine Unterflügeldruckversorgung nach außen gepresst werden können.

Die erfinderische Lösung besteht unter anderem darin, den Blechtopf 15 auf das Aluminiumgehäuse 1 aufzupressen. Da die Bauraumvorgabe innerhalb der Riemenscheibe ein Kreis ist, ist die Herstellung des Blechtopfes 15 ziehtechnisch sehr einfach und mit einem homogenen Spannungsfeld darzustellen. Dadurch kann auch eine Blechdickenminimierung vorgenommen werden. Der Innendurchmesser des Blechtopfes 15 wird so gewählt, dass er kleiner ist als der kleinste Außendurchmesser des topfförmigen Aluminiumbereiches 13. Beim Aufschieben wird der Blechtopf 15 zuerst elastisch aufgeweitet und anschließend plastisch verformt. Diese plastische Verformung ist in diesem Fall gewollt, somit steht im Anschluss an den Montagevorgang die maximale elastische Verformung für die Haltefunktion des Blechtopfes 15 zur Verfügung. Es kann vorteilhaft sein, auf dem Aluminiumgehäuseteil 13 eine geringe Schräge anzuordnen, um das Aufschieben des Blechdeckels 15 zu erleichtern. Hierbei ist es jedoch notwendig, dass der Aufschiebewinkel kleiner ist als der für die Selbsthemmungsbedingung notwendige Winkel. Der Montageprozess kann erleichtert werden, indem ein Klebstoff vor der Montage auf die Pressflächen zwischen dem topfförmigen Aluminiumgehäuseteil 13 und dem Blechdeckel 15 aufgebracht wird. Dieser Klebstoff dient beim Aufschieben als eine Art Schmiermittel, der die Aufschiebekraft reduziert. Nach dem Aushärten des Klebers ergibt sich eine zusätzliche Erhöhung der Haltekraft. Wieterhin erfüllt dieser Kleber noch eine Dichtfunktion. Somit kann auf einer Abdichtung mit Hilfe von O-Ringen oder sonstigen Dichtungsmitteln verzichtet werden. Wenn die so aufgebrachte Kraft nicht ausreicht, kann es vorteilhaft sein, zusätzlich zu dem Reibschluss noch einen Formschluss in die Verbindung einzubringen. Dies kann durch eine umlaufende Rille im Gehäuse geschehen (nicht dargestellt), in die der Blechtopf 15 nach der Montage dann eingeprägt wird. Es muss aber auch keine umlaufende Nut oder Rille sein. So können am Umfang gleichmäßig verteilte Ausnehmungen den Zweck ausreichend erfüllen.

Um eine einfache Herstellung des Blechtopfes 15 gewährleisten zu können, wird im Bereich der eigentlichen Pumpe eine Aufteilung der Funktionen vorgenommen. Als Seitenplatte 11 der Pumpe kann ein eigener Deckel konzipiert werden; der wahlweise aus diversen Materialien, vorzugsweise aus Aluminium oder Stahl, hergestellt werden kann. Der Deckel 11 beinhaltet alle notwendigen Konturen für das Timing, die Reduzierung der Spalte und die Integration der Kaltstartringkontur bei einer Flügelzellenpumpe. Der Deckel 11 ist als kreisrunde Scheibe dargestellt, die Scheibe wird über eine Zentrierung im Aluminiumgehäuse (hier nicht dargestellt) exakt zentriert und über Stifte oder einen Absatz im Hubring positioniert. Damit kann die Seitenplatte 11 ausreichend genau positioniert werden.

Der Wellendichtring 19 wird in einem Bauraum aufgenommen, der von dem Blechdeckel 15 mit seiner Auskragung 17 und der Seitenplatte 11 gebildet wird. Dadurch kann der Wellendichtring 19 exakt aufgenommen werden.

Bei entsprechender Herstellung des Blechtopfes 15 kann eine leicht nach innen geneigte axiale Fläche tief gezogen werden. Dadurch bekommt der Blechtopf eine federnde Wirkung. Diese Federung bewirkt eine Vorspannung der Seitenplatte 11 und damit der Rotationsgruppe. Hiermit können die auftretenden Druckkräfte gegebenenfalls kompensiert werden. Dadurch wird die Volumetrie der Ölpumpe verbessert. Zusätzlich ist es aber möglich, die Federung dieses Deckels so einzustellen, dass das Druckbegrenzungsventil der Pumpe entfällt. Beispielsweise kann bei entsprechend hohem Druck der Deckel so weit wieder auffedern, dass der Druckbereich der Pumpe zum Saugbereich der Pumpe sich entlädt und die Pumpe keinen höheren Druck aufbauen kann.

## Patentansprüche

1. Pumpe, insbesondere Flügelzellenpumpe, Rollenzellenpumpe oder Zahnradpumpe, mit einer Rotationsgruppe, wie beispielsweise mit Rotor (5), Flügeln oder Rollen, Hubkonturring (3) und Seitenplatten bzw. Zahnrädern oder Ritzel und Außenrad, wobei die Rotationsgruppe innerhalb eines topfförmigen Aluminiumgehäuses (1) angeordnet ist, **dadurch gekennzeichnet, dass** das Aluminiumgehäuse (1) an einem Deckel eines Kurbelwellengehäuses eines Verbrennungsmotors innerhalb eines Riemenscheibenbereichs dargestellt ist und dass das Aluminiumgehäuse (1) durch einen topfförmigen Blechdeckel (15) umgriffen wird.

2. Pumpe nach Anspruch 1, **dadurch gekennzeichnet, dass** der Blechdeckel (15) und das Aluminiumgehäuse (1) mittels eines Presssitzes miteinander verbunden sind.

3. Pumpe nach Anspruch 2, **dadurch gekennzeichnet, dass** der Blechdeckel (15) und das Aluminiumgehäuse (1) zusätzlich zum Presssitz eine Klebeverbindung aufweist.

4. Pumpe nach Anspruch 3, **dadurch gekennzeichnet, dass** die Klebeverbindung zusätzlich als Dichtungseinrichtung wirksam ist.

5. Pumpe nach einem der vorhergehenden Ansprüche, **dadurch gekennzeichnet, dass** der Blechdeckel (15) und eine erste Seitenplatte (11) eine Aufnahme für einen Radialwellendichtring (19) ausbilden.

6. Pumpe nach einem der vorhergehenden Ansprüche, **dadurch gekennzeichnet, dass** die Pumpe von der Kurbelwelle des Verbrennungsmotors angetrieben wird und der Wellendichtring (19) die Kurbelwelle und die Pumpe nach außen abdichtet.

7. Pumpe nach einem der vorhergehenden Ansprüche, **dadurch gekennzeichnet, dass** die Pumpe eine Schmierölpumpe für den Verbrennungsmotor darstellt.

8. Pumpe nach einem der vorhergehenden Ansprüche, **dadurch gekennzeichnet, dass** die Pumpe eine doppelhubige, temperatur- und/oder druckabhängig schaltbare Flügelzellenpumpe ist.

9. Pumpe nach einem der vorhergehenden Ansprüche, **dadurch gekennzeichnet, dass** die Flügel oder Rollen der Flügelzellenpumpe oder Rollenzellenpumpe durch Unterflügelführungseinrichtungen wie z. B. Unterflügelkonturringe (23) ausgefahren werden.

10. Pumpe nach einem der vorhergehenden Ansprüche, **dadurch gekennzeichnet, dass** der Hubkonturring (3) Ausnehmungen für eine Saugölzuführung von der Rückseite der Rotationsgruppe zur Vorderseite aufweist, so dass das Öl aus dem Ansaugbereich um den Hubkonturring (3) herum auf die axial gegenüberliegende Seite strömen kann.

11. Pumpe nach einem der vorhergehenden Ansprüche, **dadurch gekennzeichnet, dass** der Hubkonturring (3) und die erste Seitenplatte (11) zum Aluminiumgehäuse (1) durch zwei Stifte oder einen Zentrierbund und einen Stift zentriert und fixiert sind.

12. Pumpe nach einem der vorhergehenden Ansprüche, **dadurch gekennzeichnet, dass** das Aluminiumgehäuse (1) eine zweite Seitenplatte (9) ausbildet und Ansaug- und Ausstoßöffnungen und gegebenenfalls Unterflügelnuten aufweist und die axial gegenüberliegende erste Seitenplatte (11) in diesen Bereichen so genannte Schattenports aufweist.

13. Pumpe nach einem der vorhergehenden Ansprüche, **dadurch gekennzeichnet, dass** der Hubkonturring (3) zusätzlich radiale Ansaugöffnungen aufweisen kann und zum Aluminiumgehäuse (1) radial beabstandet sein kann.

14. Pumpe nach einem der vorhergehenden Ansprüche, **dadurch gekennzeichnet, dass** der Hubkonturring (3) aus Blech dargestellt ist und eine doppelhubige Kontur aufweist.

15. Pumpe nach einem der vorhergehenden Ansprüche, **dadurch gekennzeichnet, dass** der topfförmige Blechdeckel eine integrierte Hubkontur und entsprechende Schattenports und gegebenenfalls die Unterflügelnut aufweist.

16. Pumpe nach einem der vorhergehenden Ansprüche, **dadurch gekennzeichnet, dass** der Blechdeckel einen eingepressten Hubring, beispielsweise aus Sinterstahl, aufweist.

## Claims

1. Pump, in particular a vane pump, roller cell pump or gear pump, having a rotation group including for example a rotor (5), vanes or rollers, a stroke contour ring (3) and end plates or gear wheels and sprockets or outer wheel, the rotation group being situated inside a pot-shaped aluminum housing (1), **characterized in that** the aluminum housing (1) is produced on a cover of a crankshaft housing of a combustion engine within a pulley zone and that the aluminum housing (1) is surrounded by a sheet metal cover (15).

2. Pump according to Claim 1, **characterized in that** the sheet metal cover (15) and the aluminum housing (1) are connected with each other by means of a force fit.

3. Pump according to Claim 2, **characterized in that** in addition to the force fit the sheet metal cover (15) and the aluminum housing (1) have an adhesive bond.

4. Pump according to Claim 3, **characterized in that** the adhesive bond acts additionally as a sealing device.

5. Pump according to one of the preceding claims, **characterized in that** the sheet metal cover (15) and a first end plate (11) form a receptor for a radial shaft sealing ring (19).

6. Pump according to one of the preceding claims, **characterized in that** the pump is driven by the crankshaft of the combustion engine, and the shaft sealing ring (19) seals the crankshaft and the pump from the outside.

7. Pump according to one of the preceding claims, **characterized in that** the pump is a lubricating oil pump for the combustion engine.

8. Pump according to one of the preceding claims, **characterized in that** the pump is a dual-stroke, temperature- and/or pressure-dependent switchable vane pump.

9. Pump according to one of the preceding claims, **characterized in that** the vanes or rollers of the vane pump or roller cell pump are extended by under-vane guide devices such as for example under-vane contour rings (23).

10. Pump according to one of the preceding claims, **characterized in that** the stroke contour ring (3) has recesses for a suction oil feed from the back side of the rotation group to the front side, so that the oil can flow from the suction area around the stroke contour ring (3) to the axially opposite side.

11. Pump according to one of the preceding claims, **characterized in that** the stroke contour ring (3) and the first end plate (11) are centered and affixed to the aluminum housing (1) by two pins or a centering collar and one pin.

12. Pump according to one of the preceding claims, **characterized in that** the aluminum housing (1) forms a second end plate (9) and has intake and emission openings and possibly under-vane grooves, and the first end plate (11) lying axially opposite in these areas has so-called shadow ports.

13. Pump according to one of the preceding claims, **characterized in that** the stroke contour ring (3) may have radial suction openings in addition and may be spaced at an interval radially from the aluminum housing (1).

14. Pump according to one of the preceding claims, **characterized in that** the stroke contour ring (3) is made of sheet metal and has a dual-stroke contour.

15. Pump according to one of the preceding claims, **characterized in that** the pot-shaped sheet metal cover has an integrated stroke contour and corresponding shadow ports, and possibly the under-vane groove.

16. Pump according to one of the preceding claims, **characterized in that** the sheet metal cover has a pressed in stroke ring, for example of sintered steel.

## Revendications

1. Pompe, en particulier pompe rotative à palettes, pompe à rouleaux ou pompe à engrenages, avec un groupe de rotation, comme par exemple avec un rotor (5), des palettes ou des rouleaux, une bague de contour à levée (3) et des plaques latérales et/ou des engrenages ou des pignons et un engrenage extérieur, le groupe de rotation étant disposé à l'intérieur d'un corps en aluminium en forme de pot (1), **caractérisée en ce que** le corps en aluminium (1) est représenté sur le couvercle d'un carter à vilebrequin d'un moteur à combustion interne à l'intérieur d'une zone de poulie, et **en ce que** le corps en aluminium (1) est entouré d'un couvercle en tôle (15) en forme de pot.

2. Pompe selon la revendication 1, **caractérisée en ce que** le couvercle en tôle (15) et le corps en aluminium (1) sont reliés entre eux au moyen d'un ajustage serré.

3. Pompe selon la revendication 2, **caractérisée en ce que** le couvercle en tôle (15) et le corps en aluminium (1) présentent en outre pour l'ajustage serré un assemblage collé.

4. Pompe selon la revendication 3, **caractérisée en ce que** l'assemblage collé agit en outre comme un dispositif de joint d'étanchéité.

5. Pompe selon l'une quelconque des revendications précédentes, **caractérisée en ce que** le couvercle en tôle (15) et une première plaque latérale (11) forment un logement pour une bague d'étanchéité radiale (19).

6. Pompe selon l'une quelconque des revendications précédentes, **caractérisée en ce que** la pompe est entraînée par le vilebrequin du moteur à combustion interne et la bague d'étanchéité radiale (19) assure l'étanchéité du vilebrequin et de la pompe vis-à-vis de l'extérieur.

7. Pompe selon l'une quelconque des revendications précédentes, **caractérisée en ce que** la pompe constitue une pompe à huile pour le moteur à combustion interne.

8. Pompe selon l'une quelconque des revendications précédentes, **caractérisée en ce que** la pompe est une pompe rotative à palettes à double course actionnable en fonction de la température et/ou de la pression.

9. Pompe selon l'une quelconque des revendications précédentes, **caractérisée en ce que** les palettes ou les rouleaux de la pompe rotative à palettes ou de la pompe à rouleaux sont sortis par des dispositifs de guidage de palettes inférieures comme par exemple des bagues de contour de palettes inférieures (23).

10. Pompe selon l'une quelconque des revendications précédentes, **caractérisée en ce que** la bague de contour à levée (3) présente des évidements pour une alimentation en huile obtenue par aspiration du côté arrière du groupe de rotation au côté avant, de sorte l'huile issue de la zone d'aspiration autour de la bague de contour à levée (3) puisse s'écouler sur le côté axialement opposé.

11. Pompe selon l'une quelconque des revendications précédentes, **caractérisée en ce que** la bague de contour à levée (3) et la première plaque latérale (11) sont fixées et centrées par rapport au corps en aluminium (1) par deux tiges ou un collet de centrage et une tige.

12. Pompe selon l'une quelconque des revendications précédentes, **caractérisée en ce que** le logement en aluminium (1) forme une seconde plaque latérale (9) et présente des ouvertures d'aspiration et d'éjection et si besoin des rainures de palettes inférieures et la première plaque latérale (11) axialement opposée présente dans ces zones ce que l'on appelle des orifices aveugles.

13. Pompe selon l'une quelconque des revendications précédentes, **caractérisée en ce que** la bague de contour à levée (3) peut en outre présenter des ouvertures d'aspiration radiales et peut être espacée radialement du corps en aluminium (1).

14. Pompe selon l'une quelconque des revendications précédentes, **caractérisée en ce que** la bague de contour à levée (3) est constituée de tôle et **en ce qu'**elle présente un contour à double levée.

15. Pompe selon l'une quelconque des revendications précédentes, **caractérisée en ce que** le couvercle en tôle en forme de pot présente un contour à levée intégré et des orifices aveugles correspondants et si besoin la rainure de palette inférieure.

16. Pompe selon l'une quelconque des revendications précédentes, **caractérisée en ce que** le couvercle en tôle présente une bague de levage enfoncée, par exemple en acier fritté.
